# EUROPEAN PATENT APPLICATION

(11) **EP 1 279 418 A2**
(43) Date of publication of application: **29.01.2003**
(21) Application number: 02016175.8
(22) Date of filing: 20.07.2002
(51) Int. Cl.: A63B 37/06, B29D 31/00

(54) **Golf ball with high specific gravity threads**

(30) Priority: 27.07.2001 US 917175
(71) Applicant: Dunlop Sports Group Americas, Greenville, SC 29607 (US)
(72) Inventor: Kuttapa, Sanjay, Clemson, SC 29631 (US); John, Jens, Westminster, SC 29693 (US); Calabria, John, Easly, SC 29678 (US)
(74) Representative: Torggler, Paul Norbert, Dr.

(57) **Abstract**

A thread wound golf ball having improved characteristics of moment of inertia, spin, and total flight distance, comprising a center, a thread winding layer disposed over the center forming a core, and a cover disposed over the core. The improved characteristics are achieved by shifting the weight of the golf ball from the center towards the periphery by use of heavy thread. This could be achieved by adding a high specific gravity filler material, such as tungsten, to the conventional thread compound and/or using polymer materials in the thread that are inherently heavier. By using a high specific gravity filler material, other desirable characteristics inherent in a wound ball such as resilience, controllability and feel, are not affected.

## Description

### BACKGROUND OF THE INVENTION

### 1. Field of the Invention

The invention relates generally to compositions for golf balls. More specifically, the invention relates to an improved wound golf ball construction having high specific gravity thread windings so as to provide increased moment of inertia and improved trajectory distance.

### 2. Description of the Related Art

As is well known in the industry, there are a number of different types of golf balls of which the predominant varieties are two-piece and three-piece golf balls. A two-piece or solid golf ball typically consists of a core and a cover. A three-piece ball typically consists of a center, an intermediate layer, which may be solid or comprise one or more elastomeric thread windings, and a cover. A ball with a solid intermediate layer is known as a multi-layered ball, while a ball with thread windings is referred to as a wound ball. In a three-piece configuration, the center and intermediate layer are collectively known as the core. In the three-piece golf ball configurations, the center is usually made of natural or synthetic rubber and may be either solid or have a liquid/paste form. The cover can be constructed from Balata, ionomer-based compounds, urethane compounds or any suitable thermoplastic or thermosetting material.

One of the parameters of golf ball performance that receives great attention is flight distance. Although there are a variety of factors that influence a golf ball's flight distance, perhaps the most important factors are the resilience characteristics and moment of inertia of the ball, both of which are dictated in large part by the materials used to construct the golf ball.

In general, solid golf balls have a higher moment of inertia in comparison to wound golf balls. This is due to the fact that the intermediate layer of a wound ball located between the center and cover has the lowest specific gravity or density. This is attributed to the material used in the thread windings (typically polyisoprene rubber) and to the inherent voids formed between said windings when stretched and wound over the center. Golf balls with a higher moment of inertia will exhibit a lower spin rate at launch; also, the decay of spin during flight is lower. Taken in combination, a lower spin rate at launch along with a decreased decay in that respective spin rate will increase the overall distance that a golf ball can travel.

The resilience of a golf ball also affects the distance it will travel, although not to the same degree as the moment of inertia. Hence, wound golf balls, which exhibit much higher resilience characteristics in comparison to their solid counterparts, will not achieve the same distance due to their lower moment of inertia. However, if the moment of inertia of a wound ball is increased to that of a solid ball, the wound ball would travel further than the solid ball due to the higher resilience of the wound ball. While a wound golf ball provides a golfer with better controllability and feel characteristics, it lacks a high moment of inertia and thus is unable to provide the extra distance.

For the foregoing reasons, it is desirable to produce a wound golf ball with a higher moment of inertia to improve the trajectory distance that the ball travel, without affecting the wound ball's inherent resilience, controllability and feel characteristics.

### SUMMARY OF THE INVENTION

The present invention is directed towards a wound golf ball with an increased moment of inertia to improve the trajectory distance that the ball travels, without affecting the wound ball's inherent resilience, controllability and feel characteristics. A wound golf ball having features of the present invention comprises a center, the center being either a solid rubber or fluid-filled center, an intermediate layer comprising one or more elastomeric thread windings disposed over the center forming a core, and an outer cover disposed over the core having a plurality of dimples. To increase the overall distance that the ball will travel, the moment of inertia of the ball is increased by shifting the weight from the center towards the periphery of the ball. The weight shifting is accomplished by increasing the specific gravity of the thread to a value greater than 0.94, more particularly 0.96 and greater, even more particularly 1.00 and greater, and still even more particularly 1.2 and greater. This is accomplished by (and not necessarily in this order): (1) lowering the specific gravity of the center via the removal of the center's weight enhancing materials; and (2) by substituting conventional thread materials with materials having a specific gravity value greater than 0.94, more particularly 0.96 and greater, even more particularly 1.00 and greater, and still even more particularly 1.2 and greater and/or by adding high specific gravity fillers such as tungsten powder to the thread compound. By utilizing a high specific gravity material, desirable resilience and modulus characteristics inherent in a golf ball thread and windings are not compromised.

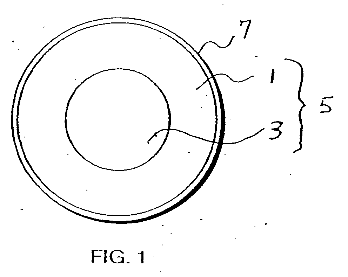

### BRIEF DESCRIPTION OF THE DRAWING

These and other features, aspects, and advantages of the present invention will become better understood with regard to the following description, appended claims, and the accompanying drawing which is given by way of illustration only, and thus is not limitative of the present invention and wherein:
The sole figure of the drawing shows a cross section of a wound golf ball according to one embodiment of the present invention.

### DETAILED DESCRIPTION OF THE INVENTION

Referring to the drawing, attention is drawn to a wound golf ball comprising a thread winding layer **1**, which may be a thermoset or thermoplastic elastomer (TPE) formed of conventional materials known in the art such as natural rubber and/or polyisoprene, other elastomers such as TPEs, polyurethane, latex etc., or any known material having a specific gravity greater than 0.94, more particularly 0.96 and greater, even more particularly 1.00 and greater, and still even more particularly 1.2 and greater. This layer is disposed over a solid or liquid-filled center **3** forming a core **5**. The core **5** is enshrouded by a cover **7**, which may be thermoplastic or a thermoset formed of conventional materials known in the art such as Balata and/or synthetic rubber, ionomer resins, polyurethane, thermoplastic elastomers (TPEs) or a combination of the foregoing. The cover **7** is either a single or multi-layered construction having a plurality of dimples (not shown) on its outermost surface. The center can be of two types, solid or liquid. The liquid center is one where liquid or gel is held in a rubber bag or shell that is well known in the art. The solid center is made from a combination of polybutadiene rubber, natural and/or polyisoprene rubber, zinc acrylate salt with weight enhancing materials and curatives. In a preferred embodiment, the center is made of a rubber composition comprising: 80-100 PPHR (parts per 100 parts by weight of the rubber in the composition) of any polybutadiene, 0-20 PPHR of natural, polyisoprene or other synthetic rubber or thermoplastic, 10-30 PPHR of zinc acrylate salt, 0-50 PPHR of weight enhancing materials (fillers), and 0.5-5 PPHR of curatives. The weight enhancing materials or fillers used are selected on the basis of specific gravity. In a preferred embodiment, the filler should have a specific gravity of about 4.3 or greater. Zinc oxide, barium sulfate, tungsten etc., and their mixtures thereof are examples of suitable fillers.

The curatives used in forming the golf ball center can be any of a variety of peroxides. The most important characteristic of the peroxide is its decomposition rate expressed by its half-life (t.sub.1/2). The half-life is the time required for one half of the molecules of a given amount of peroxide (or its blend) at a certain temperature to decompose. The peroxide (or its blend) that would work in the present system is one that has about a "one hour" half-life between 70 and 155 °C. 1,1-Di-(tert-butylperoxy)-3,3,5-trimethyl-cyclohexane has a one-hour half-life between 105 and 115 °C. Dialkyl peroxides, diacyl peroxides, peroxyesters and peroxyketals, alone or in combination, can be used as the curing agent to produce a golf ball center having the desired physical properties. As set forth above, 1,1-Di-(tert-butylperoxy)-3,3,5-trimethyl-cyclohexane, a peroxyketal, is the preferred curing agent. Furthermore, a sulfur based cure system may also be employed (if necessary) to achieve the desired center properties. The sulfur based cure system is selected from the group consisting of elemental sulfur, chemical accelerators and blends thereof.

The center is manufactured by using conventional compression molding processes. The components are mixed together in an internal mixer or any other suitable rubber mixing equipment and extruded to form preforms if necessary, which are then placed in cavities in a mold and compressed or transfer molded under pressure and temperature and cured/vulcanized to form centers. Preforms are necessary only if a compression molding technique is employed. The same mix may also be injection molded. Curing is carried out in the mold at temperatures in the approximate range of about 280-380 °F for 1-20 minutes depending on the compound and the process used.

The thread winding layer **1** is formed of any suitable elastomer thread material, such as natural or polyisoprene or any synthetic thermoset rubber or TPE and their combinations thereof, that is stretched and wound about the center **3** as is conventional in the art.

To increase the flight distance of a conventional wound ball in accordance with the present invention, the moment of inertia is increased. Increasing the moment of inertia reduces the overall rate of spin at launch and reduces the decay of spin during flight. This reduction in the spin rate and its corresponding decay, allows a golf ball to travel further distances. In order to achieve a greater moment of inertia, the weight of the ball is shifted from the center of the ball **3** to the thread winding layer **1**. This is done by (and not necessarily in this order): (1) reducing the amount of weight enhancing materials in the compound forming the center, which lowers the center's **3** specific gravity; and (2) by incorporating a filler material having a high specific gravity (SG) in the approximate range of 5.6 or higher and a preferred SG of 19.3 (fine tungsten powder) into the thread and/or by substituting conventional thread materials with materials having a specific gravity value greater than 0.94, more particularly 0.96 and greater, even more particularly 1.00 and greater, and still even more particularly 1.2 and greater.

Filler materials having a high specific gravity are used in the thread or any material because they occupy the least volume in any compound for a given weight and therefore, do not influence or reduce other desirable properties inherent in the wound golf ball such as resilience, controllability and feel. A listing of such inorganic elements or possible filler materials is provided in Table -1 below.

In one embodiment of the invention, threads incorporating such high specific gravity filler materials are prepared by incorporating said filler materials at the thread compound mixing or formulating stages. This is then calendered or finished to the required dimensions. The weight percentage of tungsten in the thread compound ranges from 0.1% to 30%, while in one embodiment, a weight percentage of 9.9% is noted. The volume percentage of tungsten in the thread compound ranges from 0.1 % to 10.0%, while in one embodiment, a volume percentage of 0.5% is noted. Hence, in the embodiment noted above, a compound formula of 11 lbs of tungsten powder per 100 lbs of rubber is utilized. Once the compound is produced, it is then cured and slit, as is normally done in the conventional thread manufacturing process. Other suitable thread manufacturing processes and/or materials may also be employed to increase the specific gravity of the thread to a value greater than 0.94, more particularly 0.96 and greater, even more particularly 1.00 and greater, and still even more particularly 1.2 and greater. This may be achieved by employing highly resilient polyurethane, TPEs or any other known materials having a specific gravity of 0.94, more particularly 0.96 and greater, even more particularly 1.00 and greater, and still even more particularly 1.2 and greater (either with or without the addition of high SG fillers), which would provide the functional properties necessary in its use and also the increased specific gravity that would lead to an increased moment of inertia in the ball.

The dimension of the thread ranges from 0.008 - 0.028 x 0.015 - 0.125 inch, while in one embodiment, the dimension of the thread is approximately 0.017" x 5/64 inch and has a specific gravity of about 0.95 to 1.25, most particularly 1.04. This specific gravity can be higher or lower depending on the amount of tungsten filler added to the thread compound and/or the non-filler thread material used. The specific gravity of the thread without the addition of weight enhancing materials is about 0.94.

By adding high specific gravity fillers to the thread winding layer **1** and/or by using materials with inherently higher (greater than 0.94, more particularly 0.96 and greater, even more particularly 1.00 and greater, and still even more particularly 1.2 and greater) SG values, the resulting golf balls produced can achieve an increased moment of inertia, which translates into increased ball performance, particularly in the areas of Driver Carry Distance and Driver Carry plus Roll Distance. Table-2 below provides calculated data for four conventional golf ball constructions, and compares them to Ball #3, which represents a typical embodiment of the present invention whereby tungsten powder is incorporated in the thread compound of the thread winding layer **1**. The values given in Table-2 represent one embodiment of the invention (Ball #3); however, there are many conceivable variations (of Ball #3) as will be discussed below.

The center size of Ball #3 can range from 1.00 - 1.48 inches; the center weight of Ball #3 can range from 15 - 35 grams; the core size of Ball #3 can range from 1.48 - 1.68 inches; the core weight of Ball #3 can range from 30 - 40 grams; the diameter of Ball #3 can range from 1.58 - 1.78 inches; the weight of Ball #3 can range from 40 - 50 grams; the calculated Moment of Inertia of Ball #3 can range from 12.4 - 13.4 (g-in²); the Specific Gravity (SG) of the Center of Ball #3 can range from 1.2 -1.3; the SG of the threads layer of Ball #3 can range from 0.7 - 1.25; the SG of the core of Ball #3 can range from 1.0 - 1.2; the thread layer weight of Ball #3 can range from 2.5 - 25.0 grams; and the thread layer thickness of Ball #3 can range from 0.05 - 0.35 inches. With these parameters, a Driver Carry Distance of at least 258.16 yards and a Driver roll & Carry Distance of at least 277.68 yards is achieved.

It is to be understood that the present invention is by no means limited to the particular constructions herein disclosed and/or shown in the drawing, but also comprises any modifications or equivalents within the spirit and scope of the claims.

**TABLE - 1**

| Inorganic Element | Specific Gravity |
|---|---|
| Tungsten | 19.3 |
| Bismuth | 9.8 |
| Copper | 8.9 |
| Bismuth oxide | 8.9 |
| Nickel | 8.9 |
| Cobalt | 8.9 |
| Iron/Steel | 7.7 |
| Tin | 7.3 |
| Chromium | 7.2 |
| Zinc | 7.1 |
| Bismuth subcarbonate | 6.9 |
| Cupric oxide | 6.4 |
| Barium tungstate | 6.4 |
| Cuprous oxide | 6.0 |
| Ferrous oxide | 5.7 |
| Zirconium dioxide | 5.5 |

**TABLE - 2**

| **Ball Data :** | **Ball #1** | **Ball #2** | **Ball #3** | **Ball #4** | **Ball #5** |
|---|---|---|---|---|---|
| Type | 3-piece | 3-piece | 3-piece | 2-piece | 2-piece |
| Center Size | 1.125 | 1.35 | 1.35 | n/a | n/a |
| (Ø in inches) | | | | | |
| | | | | | |
| Center Weight (g) | 17.0 | **26.65** | **26.0** | n/a | n/a |
| Core Size | 1.575 | 1.575 | 1.575 | 1.509 | 1.539 |
| (Ø in inches) | | | | | |
| | | | | | |
| Core Weight (g) | 35.65 | 35.65 | 35.65 | 34.60 | 36.5 |
| | | | | | |
| Ball Size | 1.68 | 1.68 | 1.68 | 1.68 | 1.68 |
| (Ø in inches) | | | | | |
| | | | | | |
| Ball Weight (g) | 45.5 | 45.5 | 45.5 | 45.5 | 45.5 |
| **Calculated Moment** | **12.43** | **12.45** | **12.57** | **12.52** | **12.54** |
| **of Inertia (g-in**^{**2**}**)** | | | | | |
| | | | | | |
| Specific Gravity (SG) | - | 1.262 | 1.232 | - | - |
| Of Center | | | | | |
| | | | | | |
| SG of Thread Layer | - | 0.725 | 0.777 | - | - |
| | | | | | |
| SG of Core | - | 1.063 | 1.063 | - | - |
| | | | | | |
| Thread Layer | - | **9.00** | **9.65** | - | - |
| Weight (g) | | | | | |
| | | | | | |
| Thread Layer | | | | | |
| Size (Ø in inches) | - | 0.1125 | 0.1125 | - | - |
| | | | | | |
| **Flight Data :** | | | | | |
| Driver Carry Distance | - | 254.64 | 258.16 | - | - |
| (yards) | | | | | |
| | | | | | |
| Driver Carry & | | | | | |
| Roll Distance | - | 272.63 | 277.68 | - | - |

## Claims

1. A golf ball comprising:
a center;
a thread winding layer comprising at least one thread, said thread having a specific gravity greater than 0.94, and wherein said thread winding layer is disposed over said center creating a core; and
a cover, wherein said cover is disposed over said core.

2. The golf ball of claim 1, wherein said thread is comprised of a thermoset material having a specific gravity greater than 0.94.

3. The golf ball of claim 1, wherein said thread is comprised of a thermoplastic elastomer (TPE) material having a specific gravity greater than 0.94.

4. The golf ball of claim 1, wherein said thread comprises at least one high specific gravity filler.

5. The golf ball of claim 2, wherein said thread further comprises at least one high specific gravity filler.

6. The golf ball of claim 3, wherein said thread further comprises at least one high specific gravity filler.

7. The golf ball of claim 4, wherein said high specific gravity filler is selected from the group consisting of tungsten, bismuth, copper, bismuth oxide, nickel, cobalt, Iron/steel, tin, chromium, zinc, bismuth subcarbonate, cupric oxide, barium tungstate, cuprous oxide, ferrous oxide and zirconium dioxide.

8. The golf ball of claim 5, wherein said high specific gravity filler is selected from the group consisting of tungsten, bismuth, copper, bismuth oxide, nickel, cobalt, Iron/steel, tin, chromium, zinc, bismuth subcarbonate, cupric oxide, barium tungstate, cuprous oxide, ferrous oxide and zirconium dioxide.

9. The golf ball of claim 6, wherein said high specific gravity filler is selected from the group consisting of tungsten, bismuth, copper, bismuth oxide, nickel, cobalt, Iron/steel, tin, chromium, zinc, bismuth subcarbonate, cupric oxide, barium tungstate, cuprous oxide, ferrous oxide and zirconium dioxide.

10. The golf ball of claim 4, wherein said high specific gravity filler is tungsten.

11. The golf ball of claim 5, wherein said high specific gravity filler is tungsten.

12. The golf ball of claim 6, wherein said high specific gravity filler is tungsten.

13. A method of making a thread winding layer having a high specific gravity filler comprising the steps of:
mixing a rubber and its components and a high specific gravity filler to form a mixture;
calandering said mixture;
sheeting said mixture;
curing said mixture; and
slitting said mixture into strips.

14. The method according to claim 13, wherein said high specific gravity filler is selected from the group consisting of tungsten, bismuth, copper, bismuth oxide, nickel, cobalt, Iron/steel, tin, chromium, zinc, bismuth subcarbonate, cupric oxide, barium tungstate, cuprous oxide, ferrous oxide and zirconium dioxide.

15. The method according to claim 13, wherein said high specific gravity filler is tungsten.

16. A method of making a golf ball having high specific gravity threads comprising the steps of:
mixing a rubber, curatives and a high specific gravity filler to form a mixture;
calandering said mixture;
sheeting said mixture;
curing said mixture;
slitting said mixture into strips to form at least one heavy thread;
wrapping said heavy thread around a center forming a core; and
disposing a cover upon said core.

17. The method according to claim 16, wherein said high specific gravity filler is selected from the group consisting of tungsten, bismuth, copper, bismuth oxide, nickel, cobalt, Iron/steel, tin, chromium, zinc, bismuth subcarbonate, cupric oxide, barium tungstate, cuprous oxide, ferrous oxide and zirconium dioxide.

18. The method according to claim 16, wherein said high specific gravity filler is tungsten.

19. A method of making a golf ball having high specific gravity threads comprising the steps of:
wrapping at least one thread having a specific gravity greater than 0.94 around a center forming a core; and
disposing a cover upon said core.

20. The method of claim 19 further comprising the step of adding a high specific gravity filler to said at least one thread.

21. The method according to claim 20, wherein said high specific gravity filler is selected from the group consisting of tungsten, bismuth, copper, bismuth oxide, nickel, cobalt, Iron/steel, tin, chromium, zinc, bismuth subcarbonate, cupric oxide, barium tungstate, cuprous oxide, ferrous oxide and zirconium dioxide.

22. The method according to claim 20, wherein said high specific gravity filler is tungsten.
